# EUROPÄISCHE PATENTANMELDUNG

(11) **EP 4 216 099 A1**
(43) Veröffentlichungstag der Anmeldung: **26.07.2023**
(21) Anmeldenummer: 22152907.6
(22) Anmeldetag: 24.01.2022
(51) Int. Cl.: G06F 40/30

(54) **VORRICHTUNG UND COMPUTERIMPLEMENTIERTES VERFAHREN ZUR ANALYSE EINES HIERARCHISCHEN DOKUMENTS INSBESONDERE ZUM BEFÜLLEN EINES WISSENSGRAPHEN**

(71) Anmelder: Robert Bosch GmbH, 70442 Stuttgart (DE)
(72) Erfinder: Dorna, Michael, 74321 Bietigheim-Bissingen (DE); Stroetgen, Jannik, 76135 Karlsruhe (DE); Adel-Vu, Heike, 71272 Renningen (DE)

(57) **Zusammenfassung**

Vorrichtung und computerimplementiertes Verfahren zur Analyse eines hierarchischen Dokuments insbesondere zum Befüllen eines Wissensgraphen in dem zwei Entitäten einander durch eine Relation zugeordnet sind, wobei das Dokument Text umfasst, der als Baum (300) strukturiert ist, wobei der Text Textbestandteile umfasst, wobei der Baum (300) Knoten (302) und Blätter (304) umfasst, denen je ein Textbestandteil des Textes zugeordnet ist, wobei im Baum (300) wenigstens ein Teilbaum (306) mit wenigstens einem Knoten (302) und Blättern (304) bestimmt wird (200), deren Textbestandteile untereinander semantisch zusammenhängen, wobei eine Bezeichnung für einen Textbestandteil eines der Blätter (304) des Teilbaums (306) abhängig von einem Textbestandteil eines anderen der Blätter (304) des Teilbaums (306) und/oder abhängig von einer Bezeichnung, die diesem anderen der Blätter (304) zugeordnet ist, bestimmt wird, insbesondere eine Bezeichnung für eine der Entitäten oder die Relation, und wobei die Bezeichnung ausgegeben wird.

## Beschreibung

### Stand der Technik

Die Erfindung geht von einer Vorrichtung und einem computerimplementierten Verfahren zur Analyse eines hierarchischen Dokuments insbesondere zum Befüllen eines Wissensgraphen aus.

### Offenbarung der Erfindung

Durch das Verfahren gemäß dem unabhängigen Anspruch 1 wird eine automatisierte Analyse eines hierarchischen Dokuments insbesondere zum Befüllen eines Wissensgraphen mit sehr viel geringerem Rechenressourcenaufwand durchgeführt. Dadurch ist das Verfahren auf weniger leistungsfähigen Rechnern ausführbar als andere Verfahren.

Das computerimplementierte Verfahren zur Analyse eines hierarchischen Dokuments insbesondere zum Befüllen eines Wissensgraphen in dem zwei Entitäten einander durch eine Relation zugeordnet sind sieht vor, dass das Dokument Text umfasst, der als Baum strukturierbar ist, wobei der Text Textbestandteile umfasst, wobei der Baum Knoten und Blätter umfasst, denen je ein Textbestandteil des Textes zugeordnet ist, wobei im Baum wenigstens ein Teilbaum mit wenigstens einem Knoten und Blättern bestimmt wird, deren Textbestandteile untereinander semantisch zusammenhängen, wobei eine Bezeichnung für einen Textbestandteil eines der Blätter des Teilbaums abhängig von einem Textbestandteil eines anderen der Blätter des Teilbaums und/oder abhängig von einer Bezeichnung, die diesem anderen der Blätter zugeordnet ist, bestimmt wird, insbesondere eine Bezeichnung für eine der Entitäten oder die Relation, und wobei die Bezeichnung ausgegeben wird. Eine Struktur des Baums stellt eine Kontextinformation für Knoten und Blätter dar. Durch das Auswerten der Knoten des semantisch zusammenhängenden Teilbaums wird weder Kontextinformation noch Bezeichnungsinformation zwischen Knoten des Baums verwendet, die sich in verschiedenen Teilbäumen befinden, d.h. die semantisch nicht zusammenhängen. Die einzelnen Blätter werden nicht unabhängig voneinander klassifiziert. Die einzelnen Blätter werden in Einbeziehung der Textbestandteile und/oder Bezeichnungen anderer Blätter desselben Teilbaums klassifiziert. Dadurch wird für eine Konsistenz der Bezeichnungen innerhalb eines Teilbaums gesorgt. Dies verbessert eine Extraktion von Relationen zur Befüllung des Knowledge Graphen, da Relationen für Entitätenpaare extrahiert werden könnten, die sich nicht im gleichen Satz aber im gleichen Teilbaum befinden. Durch Ausnutzung der Baumstruktur, welche die Abstände der Entitäten verkürzt, werden die Relationen von Textbestandteilen, die im Text weit voneinander entfernt liegen, sogenannte long-distance relationships, gefunden, wenn diese Textbestandteile im Baum benachbart sind oder einen kurzen Abstand haben.

Vorzugsweise wird abhängig vom wenigstens einen Knoten und den Blättern des Teilbaums eine Sequenz von Blättern bestimmt, wobei mit einem Klassifizierer eine Klassifikation der Sequenz bestimmt wird, die die Bezeichnung definiert. Dadurch sind Sequenzmodelle verwendbar, die den Rechenressourcenaufwand gegenüber bspw. graphischen Modellen zur Baummodellierung weiter reduzieren.

Die Suche nach einer geeigneten Sequenz wird mit besonders wenig Rechenressourcenaufwand gemäß den folgenden Beispielen ausgeführt.

Beispielsweise wird im Teilbaum ein Blatt bestimmt, das näher als wenigstens ein anderes Blatt des Teilbaums an einem Knoten des Teilbaums angeordnet ist, und wobei das andere Blatt in der Sequenz nach diesem angeordnet wird.

Beispielweise wird eine Reihenfolge der Blätter des Teilbaums in der Sequenz durch eine Tiefensuche bestimmt.

Es kann vorgesehen sein, dass die Bezeichnung mit einem Klassifizier bestimmt wird, der ein Sequenzmodell, insbesondere ein long short-term memory mit linear-chain conditional random field Ausgabeschicht, umfasst, das ausgebildet ist, die Sequenz auf Bezeichnungen für die Blätter aus der Sequenz abzubilden. Dadurch wird der Rechenressourcenaufwand zusätzlich reduziert.

In einem Beispiel wird je Knoten und je Blatt eine Einbettung in einem Vektorraum bestimmt, wobei zwei Knoten oder ein Knoten und ein Blatt des Baumes demselben Teilbaum zugeordnet werden, wenn eine Ähnlichkeit ihrer Einbettungen größer als ein Schwellwert, insbesondere eine Kosinus-Distanz zwischen den zwei Knoten oder dem Knoten und dem Blatt kleiner als ein Schwellwert ist. Dadurch sind die Teilbäume mit besonders geringem Rechenressourcenaufwand auffindbar.

Es kann vorgesehen sein, dass je Knoten und je Blatt eine Einbettung in einem Vektorraum bestimmt wird, wobei abhängig von den Einbettungen der Knoten und Blättern des Teilbaums ein Zentrum im Vektorraum bestimmt wird, wobei wenigstens ein Knoten oder wenigstens ein Blatt des Teilbaums aus dem Teilbaum entfernt wird, dessen Abstand, insbesondere dessen Kosinus-Distanz, zum Zentrum größer als ein Schwellwert ist. Dadurch werden unpassende Zuordnungen der Knoten und Blätter zu den Teilbäumen in nachgelagerten Rechenschritten entfernt. Zuerst werden die Zuordnung bestimmt und basierend auf dieser der Teilbaum insbesondere als Sequenz modelliert. D.h. wenn ein kleinerer und damit besserer Teilbaum bestimmt wird, wird eine hinsichtlich des Rechenaufwandes für die Klassifikation verbesserte Sequenz bestimmt. Die Sequenz ist deshalb besser, weil sie kürzer ist, als andere Sequenzen.

In einem Beispiel wird für den wenigstens einen entfernten Knoten oder für das wenigstens eine entfernte Blatt ein Abstand seiner Einbettung zu einem Zentrum eines anderen Teilbaums bestimmt, und der wenigstens eine entfernte Knoten oder das wenigstens eine entfernte Blatt dem anderen Teilbaum zugeordnet, wenn der Abstand zum Zentrum des anderen Teilbaums kleiner ist als ein Schwellwert. Dadurch werden Zuordnungen der Knoten und Blätter zu den Teilbäumen in nachgelagerten Rechenschritten verbessert.

Eine entsprechende Vorrichtung zur Analyse eines Dokuments insbesondere zum Befüllen eines Wissensgraphen, in dem zwei Entitäten einander durch eine Relation zugeordnet sind, umfasst wenigstens einen Prozessor und wenigstens einen Speicher, wobei diese dazu ausgebildet sind, das Verfahren auszuführen. Diese Vorrichtung ermöglicht die automatisierte Analyse eines hierarchischen Dokuments insbesondere zum Befüllen eines Wissensgraphen mit sehr viel geringerem Rechenressourcenaufwand.

Ein Computerprogramm ist vorgesehen, wobei das Computerprogramm computerlesbare Instruktionen umfasst, bei deren Ausführung durch einen Computer das Verfahren ausgeführt wird.

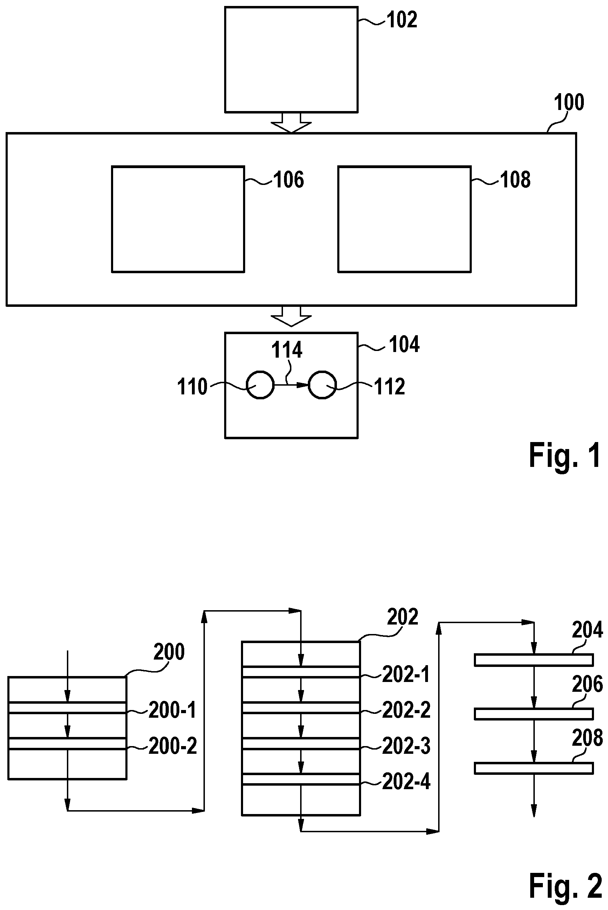

Weitere vorteilhafte Ausführungsformen sind der folgenden Beschreibung und der Zeichnung entnehmbar. In der Zeichnung zeigt:
- +Fig. 1: eine schematische Darstellung einer Vorrichtung zur Analyse eines Dokuments insbesondere zum Befüllen eines Wissensgraphen,
- Fig. 2: Schritte in einem Verfahren zur Analyse eines Dokuments insbesondere zum Befüllen des Wissensgraphen,
- Fig. 3: einen Baum mit Teilbäumen zur Analyse.

In Figur 1 ist eine Vorrichtung 100 zur Analyse eines Dokuments 102 insbesondere zum Befüllen eines Wissensgraphen 104 schematisch dargestellt. Die Vorrichtung 100 umfasst wenigstens einen Prozessor 106 und wenigstens einen Speicher 108. Der wenigstens eine Speicher 108 umfasst im Beispiel ein Computerprogramm mit Instruktionen, bei deren Ausführung durch den wenigstens einen Prozessor 102 das im Folgenden anhand der Figur 2 beschriebene Verfahren zur Analyse eines Dokuments insbesondere zum Befüllen des Wissensgraphen 104 ausgeführt wird.

Der Wissensgraph 104 umfasst Knoten, die Entitäten repräsentieren, und Kanten, die Relationen zwischen Entitätenpaaren repräsentieren. Beispielhaft dafür sind zwei Entitäten 110, 112 dargestellt, die einander durch eine Relation 114 zugeordnet sind.

Der Wissensgraph 104 wird im Beispiel durch einen Satz von Tripeln repräsentiert. Ein Tripel umfasst ein Subjekt, ein Prädikat und ein Objekt. Das Tripel drückt im Beispiel aus, dass die Entität im Subjekt des Tripels mit der Entität im Objekt des Tripels in der durch das Prädikat definierten Relation steht.

Durch das im Folgenden beschriebene Verfahren wird der Wissensgraph sehr effizient befüllt. Befüllen bedeutet, dass wenigstens eine Entität und/oder eine Relation zwischen einem Entiätenpaar hinzugefügt wird. Befüllen bedeutet im Beispiel, dass ein Tripel zum Satz von Tripeln hinzugefügt wird.

Im Beispiel wird ein Satz von Entitäten und ein Satz von Relationen bereitgestellt. Durch das im Folgenden beschriebene Verfahren wird eine Bezeichnung für die Entität oder Relation bestimmt. Wofür die Bezeichnung verwendet wird, ist von der Problemstellung abhängig. Das Verfahren ist unabhängig von der Problemstellung zur effizienten Rechenressourcen einsparenden Befüllung des Wissensgraphen ausführbar.

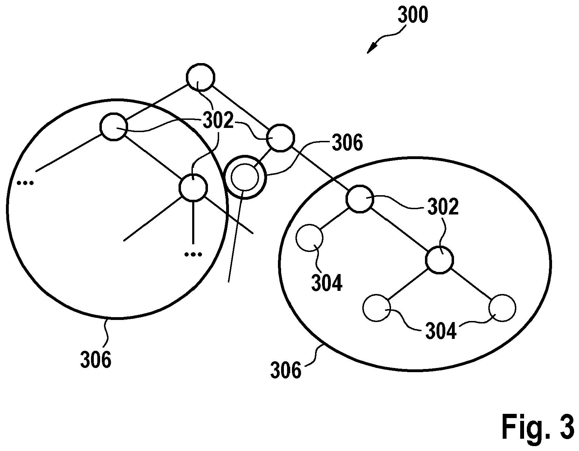

Das Verfahren zum Befüllen des Wissensgraphen 104 setzt im Beispiel voraus, dass das Dokument 102 Text umfasst. Eine Struktur des Dokument 102 wird durch einen Baum 300 repräsentiert. Ein Beispiel für den Baum 300 ist in Figur 3 schematisch dargestellt.

Das Verfahren zum Befüllen des Wissensgraphen 104 ist nicht auf Text beschränkt. Vielmehr wird Text im Beispiel verwendet, wenn man den Wissensgraphen 104 basierend auf Text befüllen möchte. Im Verfahren ist die zu verarbeitende Modalität Text, der als Knoten in einem Vektorraum repräsentiert ist. Für andere Anwendungen können andere Modalitäten vorgesehen sein, die dann ebenfalls in einem Vektorraum repräsentiert werden.

Das Verfahren setzt im Beispiel eine Baumstruktur der zugrundeliegenden Daten voraus. Beispiele für andere Anwendungen als der Analyse von Text in Dokumenten sind eine Analyse von Programmcode, z.B. XML, eine Analyse von Musikstücken, wobei eine vordefinierte Baumstruktur Teile der Musikstücke repräsentiert, z.B. Motiv, Phrase, Satz, Thema.

Der Text umfasst Textbestandteile. Der Baum 300 umfasst Knoten 302 und Blätter 304, denen je ein Textbestandteil des Textes zugeordnet ist. Blätter 304 enthalten Texte, z.B. eine Systemanforderung an ein technisches System. Knoten 306 enthalten im Beispiel Überschriften.

Das Verfahren umfasst einen Schritt 200.

Im Schritt 200 wird wenigstens ein Teilbaum 306 des Baums 300 bestimmt. Im Baum 300 wird der wenigstens eine Teilbaum 306 mit wenigstens einem Knoten 302 und Blättern 304 bestimmt, deren Textbestandteile untereinander semantisch zusammenhängen. Es kann auch vorgesehen sein, dass ein Teilbaum nur aus einem Blatt besteht.

In dem in Figur 3 dargestellten Beispiel werden drei Teilbäume 306 bestimmt. Ein erster der drei Teilbäume 306 umfasst ein Blatt 304 und ein zweiter der Teilbäume 306 umfasst einen Knoten 302 an dem zwei Blätter 304 angeordnet sind und einen mit diesem Knoten 302 verbundenen Knoten 302, an dem ein Blatt 304 angeordnet ist. Die anderen Knoten 302 und die anderen Blätter 304 sind entweder einem dritten der Teilbäume 306 oder keinem Teilbaum zugeordnet.

In einem ersten Teil-Schritt 200-1 zum Bestimmen der Teilbäume wird beispielsweise je Knoten 302 und je Blatt 304 eine Einbettung in einem Vektorraum bestimmt.

In einem ersten Teil-Schritt 200-2 zum Bestimmen der Teilbäume werden beispielsweise zwei Knoten 302 oder ein Knoten 302 und ein Blatt 304 des Baumes 300 demselben Teilbaum 306 zugeordnet, wenn eine Ähnlichkeit ihrer Einbettungen größer als ein Schwellwert ist. Die Ähnlichkeit wird beispielsweise durch eine Kosinus-Distanz zwischen den zwei Knoten 302 oder durch eine Kosinus-Distanz zwischen dem Knoten 302 und dem Blatt 304 charakterisiert. Die zwei Knoten 302 werden z.B. demselben Teilbaum 306 zugeordnet, wenn ihre Kosinus-Distanz kleiner als ein Schwellwert ist. Der Knoten 302 und das Blatt 304 werden z.B. demselben Teilbaum 306 zugeordnet, wenn ihre Kosinus-Distanz kleiner als ein Schwellwert ist.

Anschließend wird ein optionaler Schritt 202 ausgeführt. Im Schritt 202 wird eine nachgelagerte Überarbeitung der Zuordnung der Knoten 302 und der Blätter 304 zu den Teilbäumen 306 durchgeführt.

In einem ersten Teilschritt 202-1 der nachgelagerten Überarbeitung wird z.B. abhängig von den Einbettungen der Knoten 302 und Blätter 304 des Teilbaums 306 ein Zentrum im Vektorraum bestimmt.

In einem zweiten Teilschritt 202-2 der nachgelagerten Überarbeitung wird z.B. wenigstens ein Knoten 302 oder wenigstens ein Blatt 306 des Teilbaums 306 aus wenigstens einem der Teilbäume 306 entfernt, dessen Abstand, insbesondere dessen Kosinus-Distanz, zum Zentrum dieses Teilbaums 306 größer als ein Schwellwert ist.

In einem optionalen dritten Teilschritt 202-3 der nachgelagerten Überarbeitung wird z.B. für den wenigstens einen entfernten Knoten 302 oder für das wenigstens eine entfernte Blatt 304 ein Abstand seiner Einbettung zu einem Zentrum eines anderen der Teilbäume 306 bestimmt.

In einem optionalen vierten Teilschritt 202-4 der nachgelagerten Überarbeitung wird z.B. der wenigstens eine entfernte Knoten 302 oder das wenigstens eine entfernte Blatt 304 dem anderen der Teilbäume 306 zugeordnet, wenn der Abstand zum Zentrum des anderen der Teilbäume 306 kleiner ist als ein Schwellwert.

Die Knoten 302 werden z.B. einzeln durch eine Einbettung repräsentiert. Für die Blätter 304 kann vorgesehen sein, ein Satzembedding, z.B. ein CLS-Token von BERT, gemäß BERT: Pre-training of Deep Bidirectional Transformers for Language Understanding, Jacob Devlin, Ming-Wei Chang, Kenton Lee, Kristina Toutanova, Proceedings of the 2019 Conference of the North American Chapter of the Association for Computational Linguistics: Human Language Technologies, Volume 1, June 2019 zu verwenden, wobei der Satz die Textbestandteile eines Blattes 304 umfasst. Für die Knoten 302 kann vorgesehen sein, eine Einbettung der Überschrift zu verwenden.

Die Einbettungen werden z.B. mittels eines künstlichen neuronalen Netzwerks bestimmt. Die Abstände und die Zentren werden z.B. mittels des künstlichen neuronalen Netzwerks bestimmt. Das künstliche neuronale Netzwerk und diese Schwellwerte werden im Beispiel auf einem Validierungsdatensatz vorab trainiert.

Anschließend wird ein Schritt 204 ausgeführt.

Im Schritt 204 wird abhängig vom wenigstens einen Knoten 302 und den Blättern 304 des jeweiligen Teilbaums 306 eine jeweilige Sequenz von Blättern 304 bestimmt.

In einem Beispiel wird in wenigstens einem Teilbaum 306 sukzessive je ein Blatt 304 bestimmt, das näher als wenigstens ein anderes Blatt 304 dieses Teilbaums 306 an einem Knoten 302 dieses Teilbaums 306 angeordnet ist. Das andere Blatt 304 wird in der Sequenz nach diesem angeordnet.

In einem Beispiel wird eine Reihenfolge der Blätter 304 des Teilbaums 306 in der Sequenz durch eine Tiefensuche bestimmt.

In einem Beispiel wird für die Blätter eines Teilbaums eine jeweilige Einbettung erstellt. Z.B. wird ein Satzembedding, z.B. ein CLS-Token von BERT, gemäß BERT für einen Satz bestimmt, der die Textbestandteile eines Blattes 304 des Teilbaums umfasst.

Anschließend wird ein Schritt 206 ausgeführt.

Im Schritt 206 wird eine Bezeichnung für einen Textbestandteil eines der Blätter 304 wenigstens eines der Teilbäume 306 bestimmt.

Die Bezeichnung für einen Textbestandteil eines Blattes eines der Teilbäume 306 wird in einem Beispiel abhängig von einem Textbestandteil eines anderen der Blätter 304 desselben Teilbaums 306 bestimmt.

Die Bezeichnung für einen Textbestandteil eines Blattes eines der Teilbäume 306 wird in einem Beispiel abhängig von einer Bezeichnung, die diesem anderen der Blätter 304 zugeordnet ist, bestimmt.

Es kann vorgesehen sein, dass die Bezeichnung abhängig vom Textbestandteil und von der Bezeichnung des anderen Blattes 304 bestimmt wird.

Im Beispiel wird eine Bezeichnung für eine der Entitäten oder die Relation bestimmt.

In einem Beispiel wird mit einem Klassifizierer eine Klassifikation der Sequenz bestimmt, die die Bezeichnung definiert. Die Bezeichnung wird z.B. mit einem Klassifizier bestimmt, der ein Sequenzmodell umfasst das ausgebildet ist, die Sequenz auf Bezeichnungen für die Blätter 304 aus der Sequenz abzubilden.

Das Sequenzmodell ist insbesondere ein rekurrentes neuronales Netzwerk, RNN, mit linear-chain conditional random field, CRF, Ausgabeschicht. Das RNN ist z.B. wie in Long Short-Term Memory, Sepp Hochreiter, Jürgen Schmidhuber, Neural Computation 1997; 9 (8): 1735-1780 beschrieben ausgebildet. Die Ausgabeschicht ist z.B. wie in Conditional Random Fields: Probabilistic Models for Segmenting and Labeling Sequence Data and Labeling Sequence Data, John Lafferty, et. al. Proceedings of the 18th International Conference on Machine Learning 2001 (ICML 2001), pages 282-289 beschrieben ausgebildet.

Anschließend wird ein Schritt 208 ausgeführt.

Im Schritt 208 wird die Bezeichnung ausgegeben.

Im Beispiel wird wenigstens eine Entität oder wenigstens eine Relation des Wissensgraphen mit der Bezeichnung bezeichnet.

Im Beispiel wird durch die Entitäten je ein Teil des technischen Systems repräsentiert. Durch die Systemanforderung an das technische System sind deren Beziehungen untereinander definiert. Die Bezeichnung stellt in diesem Beispiel eine Relation zwischen zwei Entitäten her, die diese einander im Wissensgraphen gemäß der Systemanforderung zuordnet.

## Patentansprüche

1. Computerimplementiertes Verfahren zur Analyse eines hierarchischen Dokuments (102) insbesondere zum Befüllen eines Wissensgraphen (104) in dem zwei Entitäten (110, 112) einander durch eine Relation (114) zugeordnet sind, **dadurch gekennzeichnet, dass** das Dokument (102) Text umfasst, der als Baum (300) strukturierbar ist, wobei der Text Textbestandteile umfasst, wobei der Baum (300) Knoten (302) und Blätter (304) umfasst, denen je ein Textbestandteil des Textes zugeordnet ist, wobei im Baum (300) wenigstens ein Teilbaum (306) mit wenigstens einem Knoten (302) und Blättern (304) bestimmt wird (200), deren Textbestandteile untereinander semantisch zusammenhängen, wobei eine Bezeichnung für einen Textbestandteil eines der Blätter (304) des Teilbaums (306) abhängig von einem Textbestandteil eines anderen der Blätter (304) des Teilbaums (306) und/oder abhängig von einer Bezeichnung, die diesem anderen der Blätter (304) zugeordnet ist, bestimmt wird (206), insbesondere eine Bezeichnung für eine der Entitäten oder die Relation, und wobei die Bezeichnung ausgegeben wird (208).

2. Verfahren nach Anspruch 1, **dadurch gekennzeichnet, dass** abhängig von wenigstens einem Knoten (302) und den Blättern (304) des Teilbaums (306) eine Sequenz von Blättern (304) bestimmt wird (204), wobei mit einem Klassifizierer eine Klassifikation der Sequenz bestimmt wird (206), die die Bezeichnung definiert.

3. Verfahren nach Anspruch 2, **dadurch gekennzeichnet, dass** im Teilbaum (306) ein Blatt (304) bestimmt wird, das näher als wenigstens ein anderes Blatt (304) des Teilbaums (306) an einem Knoten (302) des Teilbaums (306) angeordnet ist, und wobei das andere Blatt (304) in der Sequenz nach diesem angeordnet wird (204).

4. Verfahren nach Anspruch 2 oder 3, **dadurch gekennzeichnet, dass** eine Reihenfolge der Blätter (304) des Teilbaums (306) in der Sequenz durch eine Tiefensuche bestimmt wird (204).

5. Verfahren nach einem der Ansprüche 2 bis 4, **dadurch gekennzeichnet, dass** die Bezeichnung mit einem Klassifizier bestimmt wird (206), der ein Sequenzmodell, insbesondere ein long short-term memory mit linear-chain conditional random field Ausgabeschicht, umfasst, das ausgebildet ist, die Sequenz auf Bezeichnungen für die Blätter (304) aus der Sequenz abzubilden.

6. Verfahren nach einem der vorherigen Ansprüche, **dadurch gekennzeichnet, dass** je Knoten (302) und je Blatt (304) eine Einbettung in einem Vektorraum bestimmt wird (200-1), wobei zwei Knoten (302) oder ein Knoten (302) und ein Blatt (304) des Baumes (300) demselben Teilbaum (306) zugeordnet werden (200-2), wenn eine Ähnlichkeit ihrer Einbettungen größer als ein Schwellwert, insbesondere eine Kosinus-Distanz zwischen den zwei Knoten (302) oder zwischen dem Knoten (302) und dem Blatt (304) kleiner als ein Schwellwert ist.

7. Verfahren nach einem der vorherigen Ansprüche, **dadurch gekennzeichnet, dass** je Knoten (302) und je Blatt (304) eine Einbettung in einem Vektorraum bestimmt wird (200-1), wobei abhängig von den Einbettungen der Knoten (302) und Blättern (304) des Teilbaums (306) ein Zentrum im Vektorraum bestimmt wird (202-1), wobei wenigstens ein Knoten (302) oder wenigstens ein Blatt (306) des Teilbaums (306) aus dem Teilbaum (306) entfernt wird (202-2), dessen Abstand, insbesondere dessen Kosinus-Distanz, zum Zentrum größer als ein Schwellwert ist.

8. Verfahren nach Anspruch 7, **dadurch gekennzeichnet, dass**, für den wenigstens eine entfernten Knoten (302) oder für das wenigstens eine entfernte Blatt (304) ein Abstand seiner Einbettung zu einem Zentrum eines anderen Teilbaums (306) bestimmt wird (202-3), und der wenigstens eine entfernte Knoten (302) oder das wenigstens eine entfernte Blatt (304) dem anderen Teilbaum (306) zugeordnet wird (202-4), wenn der Abstand zum Zentrum des anderen Teilbaums (306) kleiner ist als eine Schwellwert.

9. Vorrichtung (100) zur Analyse eines Dokuments (102) insbesondere zum Befüllen eines Wissensgraphen (104) in dem zwei Entitäten (110, 112) einander durch eine Relation (114) zugeordnet sind, **dadurch gekennzeichnet, dass** die Vorrichtung (100) wenigstens einen Prozessor (106) und wenigstens einen Speicher (108) umfasst, wobei diese ausgebildet sind, das Verfahren nach einem der Ansprüche 1 bis 8 auszuführen.

10. Computerprogramm, **dadurch gekennzeichnet, dass** das Computerprogramm computerlesbare Instruktionen umfasst, bei deren Ausführung durch einen Computer das Verfahren nach einem der Ansprüche 1 bis 8 ausgeführt wird.
